# EUROPEAN PATENT APPLICATION

(11) **EP 2 030 717 A1**
(43) Date of publication of application: **04.03.2009**
(21) Application number: 08163080.8
(22) Date of filing: 27.08.2008
(51) Int. Cl.: B23K 20/12, B23K 9/23, B23K 9/02, B23K 101/00

(54) **Method related to joining dissimilar metals and assembly made from dissimilar metals**

(30) Priority: 31.08.2007 US 848584
(71) Applicant: General Electric Company, Schenectady, NY 12345 (US)
(72) Inventor: Ganesh, Swami, Clifton Park, NY 12065 (US); Schwant, Robin Carl, Pattersonville, NY 12137 (US); Spiegel, Lyle B., Niskayuna, NY 12309 (US)
(74) Representative: Gray, Thomas

(57) **Abstract**

A method to join a first (28) and second (32) item that are made from different materials is disclosed. The method includes using a dual alloy member (36) disposed between the first (28) item and the second (32) item, the dual alloy member comprising a first material, a second material different from the first material, and a wrought region (48) between the first material and the second material. The method further includes melting together a localized area of material of the first item (28) and the first material, thereby creating a first weld joint substantially absent intermixing of the first material with the second material, and melting together a localized area of material of the second item (32) and the second material, thereby creating a second weld joint substantially absent intermixing of the second material with the first material, and thereby joining the first item (28) to the second item (32).

## Description

### BACKGROUND OF THE INVENTION

The present disclosure relates generally to turbine rotors, and particularly to welding of turbine rotors made from dissimilar metals. Operating conditions of turbines, such as gas and steam turbines for example, include high temperatures, speeds and forces. Turbine rotors are often made from advanced materials, which have material properties suited to extend an operational life of the turbine rotor. Furthermore, operating conditions, such as temperature for example, are known to vary with location within the turbine. Accordingly, it is preferred to construct the turbine rotor from different, or dissimilar advanced materials that are each most suited for the conditions corresponding to their location within the turbine.

Because advanced materials used for turbine rotors are difficult to produce in sizes that correspond to the turbine rotor, turbine rotors are often made from smaller subassemblies joined together. One method of turbine rotor construction is to bolt together sub-assemblies of bulky segments, resulting in a turbine rotor that has high complexity and mass. Another method of turbine rotor construction includes welding together sub-assemblies that have reduced mass and complexity. However, welding together of different or dissimilar metal alloy components includes the possibility of cracking in a weld joint or an adjacent heat affected zone of the components as well as inferior mechanical properties across the weld joint. This occurs because a molten weld pool of the weld joint of different alloys tends to solidify over a wider temperature range than either of the parent metals, which causes portions of the weld joint that are last to solidify to be weaker than the surrounding solid metal and torn apart by shrinkage of the weld joint. Additionally, the melting and solidifying (also known as fusion) of different chemistries results in a chemical and metallurgical transition zone that is often unpredictable in terms of its microstructure, undesirable chemical phases, and long-term response under high temperature operating conditions. The greater the difference in chemical and physical properties (such as thermal expansion for example) of the alloys, the poorer the weldability and the weld joint properties. Current methods to weld together rotor sub-assemblies having different materials involve applying welded or clad interlayers of intermediate chemistry or softer alloys on joint faces of the components in order to improve the weldability. Such an approach, apart from being painstaking, complex and costly, still involves the fusion of different alloys and property trade-offs that can compromise integrity of the weld joint. Accordingly, there is a need in the art for a turbine rotor welding arrangement that overcomes these drawbacks.

### BRIEF DESCRIPTION OF THE INVENTION

One embodiment of the invention includes a method to join a first and second item that are made from different materials. The method includes using a dual alloy member disposed between the first item and the second item, the dual alloy member comprising a first material, a second material different from the first material, and a wrought region between the first material and the second material. The method further includes melting together a localized area of material of the first item and the first material, thereby creating a first weld joint substantially absent intermixing of the first material with the second material, and melting together a localized area of material of the second item and the second material, thereby creating a second weld joint substantially absent intermixing of the second material with the first material, and thereby joining the first item to the second item.

Another embodiment of the invention includes an assembly of a first item and a second item. The assembly includes a dual alloy member disposed between the first item and the second item. The dual alloy member includes a first region comprising a first material, a second region comprising a second material different from the first material, and a wrought transition region between the first region and the second region. A first weld joint is disposed between the first region and the first item, the first weld joint substantially absent intermixing of the first material with the second material. A second weld joint is disposed between the second region and the second item, the second weld joint substantially absent intermixing of the second material with the first material.

A further embodiment of the invention includes a turbine rotor. The turbine rotor includes a first subassembly, a second subassembly, and a dual alloy member welded between the first subassembly and the second subassembly. The dual alloy member includes a first region including a first material, a second region comprising a second material different from the first material, and a wrought transition region between the first region and the second region. A first weld joint is disposed between the first region and the first subassembly, the first weld joint substantially absent intermixing of the first material with the second material. A second weld joint is disposed between the second region and the second subassembly, the second weld joint substantially absent intermixing of the second material with the first material.

There follows, by way of example, a detailed description of preferred embodiments of the invention with reference to the accompanying drawings wherein like elements are numbered correspondingly and in which:
Figure 1 depicts a schematic drawing of a turbine in accordance with an embodiment of the invention;
Figure 2 depicts a cross section view of a turbine rotor in accordance with an embodiment of the invention;
Figure 3 depicts a cross section view of a member between a first item and a second item in accordance with an embodiment of the invention;
Figure 4 depicts a flowchart of process steps for manufacturing the member in accordance with an embodiment of the invention;
Figure 5 depicts in pictorial form an embodiment of a method for manufacturing the member in accordance with an embodiment of the invention;
Figure 6 depicts in pictorial form an embodiment of a method for manufacturing the member in accordance with an embodiment of the invention; and
Figure 7 depicts in pictorial form an embodiment of a method for manufacturing the member in accordance with an embodiment of the invention; and
Figure 8 depicts a flowchart of process steps for joining two items made from different materials in accordance with an embodiment of the invention.

### DETAILED DESCRIPTION OF THE INVENTION

An embodiment of the invention provides a process to join components made from different alloys using a wrought (plastically deformed, such as forged or ring-rolled, for example) dual alloy transition member. Opposite ends of the dual alloy transition member include the respective different alloy chemistries of the components, with a chemical transition zone therebetween. The dual alloy transition member can be produced by any of the representative metal processing methods described herein and enables bridging of the components with high integrity weld joints at each end of the dual alloy transition member that are made between similar materials. Use of the dual-alloy transition member will provide appropriate structural strength to transmit mechanical forces between the components.

The nature and extent of the chemical transition zone in the transition member can be controlled in the manufacturing processes to minimize the thermal stresses across a joint formed using the dual alloy transition member. In addition, the dual alloy transition member can be heat-treated using a monolithic or a differential heat treatment to optimize its mechanical properties. It will be appreciated that such optimizing treatment is not viable across typical narrow joints using dissimilar alloys that may be currently employed in large, heavy, components such as turbine rotors, for example.

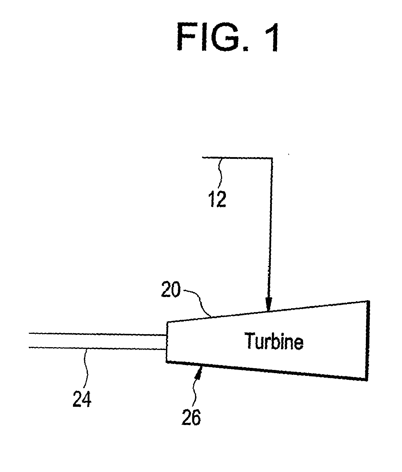

Referring now to Figure 1, a schematic drawing of an embodiment of a turbine 20 that uses a plurality of turbine blades in operable communication with a rotor 24 to convert thermal and kinetic energy to mechanical energy via rotation of the rotor 24 relative to an outer frame 26 is depicted. The turbine 20 may be a gas turbine, which converts thermal and kinetic energy resulting from expansion of combustion gasses 12, for providing mechanical energy or for generating electricity. Alternatively, the turbine 20 may be a steam turbine, which converts thermal and kinetic energy resulting from expansion of high temperature steam 12 to mechanical energy for any variety of uses, for example.

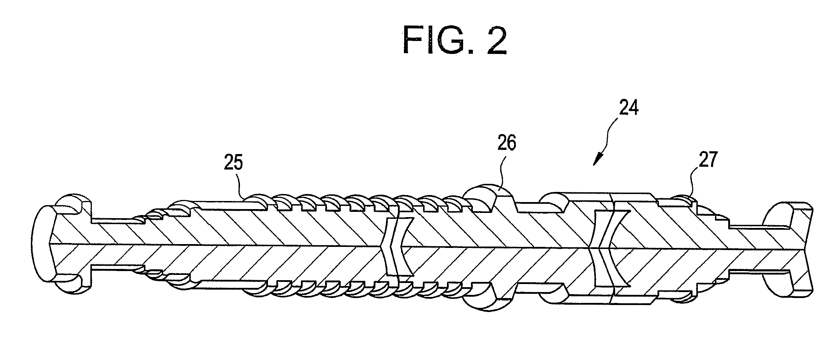

Figure 2 depicts a cross section view of one embodiment of the rotor 24. The rotor 24 includes more than one section 25, 26, 27. Any of the sections 25, 26, 27 may be made from different materials than any of the other sections 25, 26, 27, and welded to each other. Such construction enables use of more expensive high temperature alloys only at the locations where the application requires, thereby reducing overall cost and enhancing manufacturability of the rotor 24.

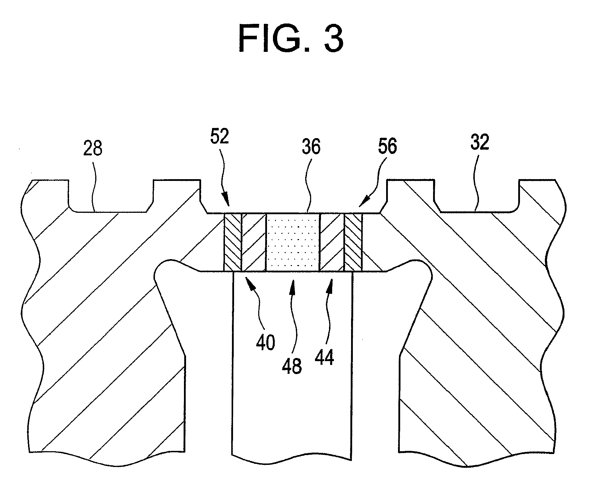

Referring now to Figure 3, a partial cross section view of the turbine 20 is depicted. A first item 28, such as a first rotor subassembly, a second item 32, such as a second rotor subassembly, and a dual-alloy transition member 36 (also herein referred to as a member) is depicted. In an embodiment, the first rotor subassembly 28 and the second rotor subassembly 32 are made from an advanced material suitable for use within the operating conditions of the turbine 20, and the member 36 is a ring member disposed between the subassemblies 28, 32. Examples of advanced materials include superalloys such as 718, 706, Rene95, 625 for example, Martensitic stainless steels, such as M152, 403, 450 for example, low alloy steels such as NiCrMoV, CrMoV for example, and Titanium alloys such as Ti-6-4, Ti6Q2, for example. The foregoing examples are for purposes of illustration, and not limitation.

The first rotor subassembly 28 is made of a first material that is adapted for use in conjunction with operating conditions associated with a first location within the turbine 20 at which it is disposed, and the second rotor subassembly 32 is made of a second, dissimilar material that is adapted for use in conjunction with different operating conditions associated with a second location within the turbine 20 at which the second rotor subassembly is disposed. For example, if the first rotor subassembly 28 is disposed at a location within the turbine 20 at which temperatures are higher than the second location, the first rotor subassembly 28 will be made from a material that is suited to operation at the temperature associated with the first location. In a similar fashion, the second rotor subassembly 32 will be made from a material that is suited to operation at the temperature associated with the second location. It will be appreciated that the foregoing is for example only, and that selection of the appropriate material will likely include consideration of more than one operating condition.

As used herein, the term "dissimilar" shall refer to alloys that have a different chemical composition. It will be appreciated that alloys within a particular class of alloys, such as steel for example, may be classified as dissimilar based upon chemical composition. As used herein, with respect to two alloys in the context of welding, the term "similar" shall refer to two alloys having the same chemistry. It will be appreciated that similar alloys with the same chemistry may have different metallurgical properties, such as grain size, strength, and microstructure, for example. Accordingly, a weld joint between two similar alloys will be absent defects that result from welding of dissimilar alloys. Furthermore, it will be appreciated that properties between two similar materials, such as mechanical, chemical, metallurgical, and thermal, and microstructure properties for example, will result in reduced residual stresses developed in a weld joint between two similar materials as compared to a weld joint between two dissimilar materials. Such reduced residual stresses allow for enhanced compatibility of the weld joint with processes subsequent to welding, such as heat treatment and machining, for example.

The member 36 is positioned between and in contact with the first rotor subassembly 28 and the second rotor subassembly 32 for welding to each of the rotor subassemblies 28, 32. Subsequent to welding each of the first rotor subassembly 28 and the second rotor subassembly 32 to the member 36, the member 36 provides a weld joint that has suitable strength (at the operating conditions associated with the location within the turbine 20 at which the member 36 is disposed) to transmit forces associated with operation of the turbine 20 between the rotor subassemblies 28, 32. That is, the member 36 provides a structural connection between the first item 28 and the second item 32. As used herein, the term "structural connection" shall refer to a connection that provides a physical, mechanical, and/or metallurgical bond between the first item 28 and the second item 32. Furthermore, the term "structural connection" shall refer to a connection that provides adequate strength in any of the anticipated conditions in which the first item 28 and the second item 32, such as rotor subassemblies 28, 32 for example, will operate to transmit any anticipated forces from one of the items 28, 32 to the other item 28, 32. The structural connection shall provide that the transmission of forces between two rotor subassemblies 28, 32 for example, will occur with a relative motion between the rotor subassemblies 28, 32 that has been determined to be acceptable to the application, such as the turbine 20, within which the rotor subassemblies 28, 32 are used.

The member 36 includes a first region 40, a second region 44, and a transition region 48. A first weld joint 52 joins the first region 40 to the first item 28 and a second weld joint 56 joins the second region 44 to the second item 32. The first region 40 includes a first material that is similar to the material from which the first item 28 is made. The second region 44 includes a second material that is dissimilar to the first material, and similar to the material from which the second item 32 is made. The resulting weld joints 52, 56, between the similar materials are suitable for transmission of forces anticipated within the operating conditions within the turbine 20, such as may exist between rotor subassemblies 28, 32, for example.

The transition region 48 of the member 36 includes a chemical and microstructure gradient or transition zone between the first material and the second material. That is, at least a portion of the transition region 48 will include a combination or mixture of the first material and the second material. Furthermore, at least a portion of the transition region 48 will include a combination of the microstructure of the material in the first region 40 and the microstructure of the material in the second region 44.

Any forces that are transferred into the member 36 from one of the items 28, 32 to which the member 36 is joined must be transferred through the transition region 48. For example, any force that is transferred from the first item 28, via the first weld joint 52, to the first region 40 must also be transferred through the transition region 48 to the second region 44 and via the second weld joint 56 to the second item 32. It will be appreciated that a similar transfer of forces from the second item 32 to the first item 28 will also be transferred via the transition region 48. Accordingly, plastically deforming, or forming, of the member 36, as will be described further below, provides a structural strength that is suitable to provide the structural connection between the first item 28 and the second item 32, such as between rotor subassemblies 28, 32 within the turbine 20, for example.

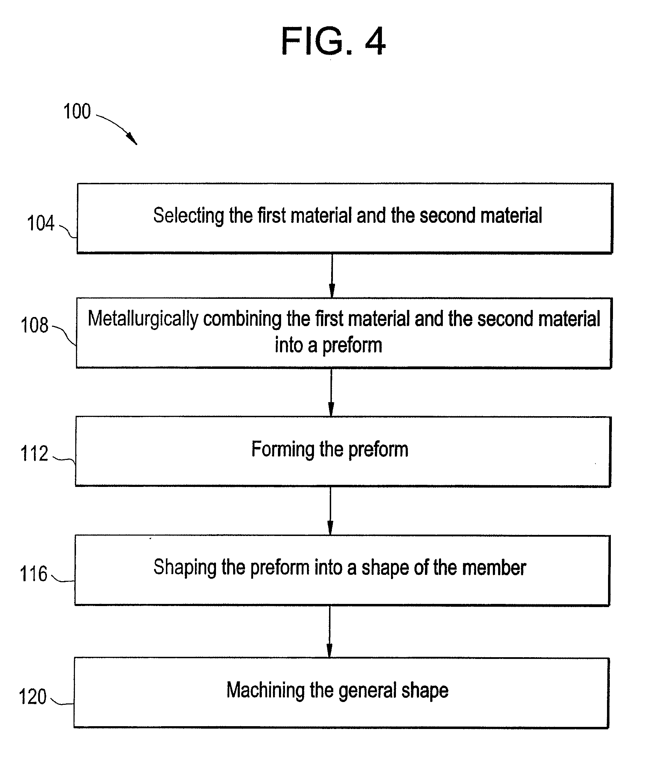

Referring now to Figure 4, a flowchart 100 of process steps for manufacturing a dual-alloy transition member, such as the dual-alloy transition member 36, is depicted. The process begins by selecting at Step 104 appropriate materials, such as a first material that is similar to the material of the first item 28 and a second material that is similar to the material of the second item 32.

The process proceeds with metallurgically combining at Step 108 the first material and the second material into a pre-form that includes the first region 40 made from the first material and the second region 44 made from the second material. The process proceeds with forming at Step 112 the pre-form to increase a strength of the preform, and also provide the chemical and microstructure gradient of the transition region 48 between the first region 40 and the second region 44.

Forming at Step 112 provides a wrought structure that is characterized by a fully recrystallized, equiaxed, homogeneous microstructure without weld defects, internal discontinuities, anisotropy, or unacceptable chemical segregation. Such wrought structures exhibit enhanced strength, ductility, toughness and fatigue capability as compared to as-cast structures. As-cast structures, which are provided by use of welded interlayers, are characterized by a directionally solidified, inter-dendritic, grain structure that exhibits chemical heterogeneity or segregation, and potential weld defects such as porosity, lack of fusion, micro-fissures, grain boundary defects, liquation, oxide or slag inclusions, to name a few. Furthermore, these defects tend to have adverse impact on strength, ductility, fatigue capability and toughness of the transition region 48.

The process proceeds further with shaping at Step 116 the preform into a general shape of the finished member 36. Shaping, at Step 116, minimizes an amount of material removal necessary by subsequent process steps, such as machining for example, to provide the final geometry and dimensional tolerances required for the finished member 36. The process concludes with machining at Step 120, the general shape provided by the shaping at Step 116 to provide the member 36 with the desired geometry and dimensional tolerances for positioning between and welding to the items 28, 32.

In an embodiment, the process also includes heat-treating to enhance a property of the member 36, such as to improve at least one characteristic such as strength, hardness, ductility, oxidation resistance, corrosion resistance, stress corrosion resistance, creep resistance, and impact resistance of the member 36. In an embodiment, heat-treating is contemplated to enhance the property of the member as a result of diffusion in the chemical and microstructure gradient between the first material and the second material.

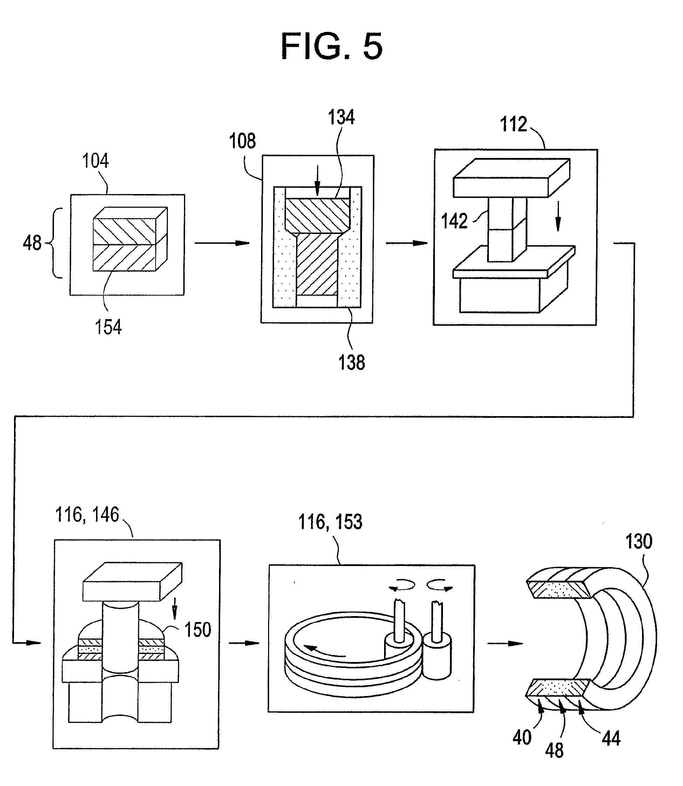

Referring now to Figure 5, a schematic pictorial representation of an exemplary process to manufacture the member 36, such as a dual alloy spacer ring 130 having the first region 40, the second region 44, and the transition region 48 is depicted. While an embodiment of a process for manufacturing the dual alloy spacer ring 130 is depicted, it will be appreciated that the scope of the invention is not so limited, and that the invention will also apply to members 36 having other geometries, as may be appropriate to be disposed between and join two items 28, 32.

In an exemplary embodiment, the selecting of appropriate materials at Step 104 includes selecting powdered metal constituents and producing a powdered metal compact 134. The selecting powdered metal constituents includes a first constituent that is similar to the material of the first item 28 and a second constituent that is similar to the second item, as described above.

The metallurgically combining at step 108 includes extruding the powdered metal compact 134 within a die 138 to create the preform 142, or billet, with a fine recrystallized grain structure for superplastic or conventional forming. The forming at Step 112 includes isothermal forging, conventional forging, or hot-isostatic pressing followed by forging, which allows an even flow of the dissimilar alloys of the first material and the second material. The shaping at Step 116 includes another forging 146 to produce a "donut-shaped" preform 150, and ring rolling 153 to provide the dual alloy spacer ring 130.

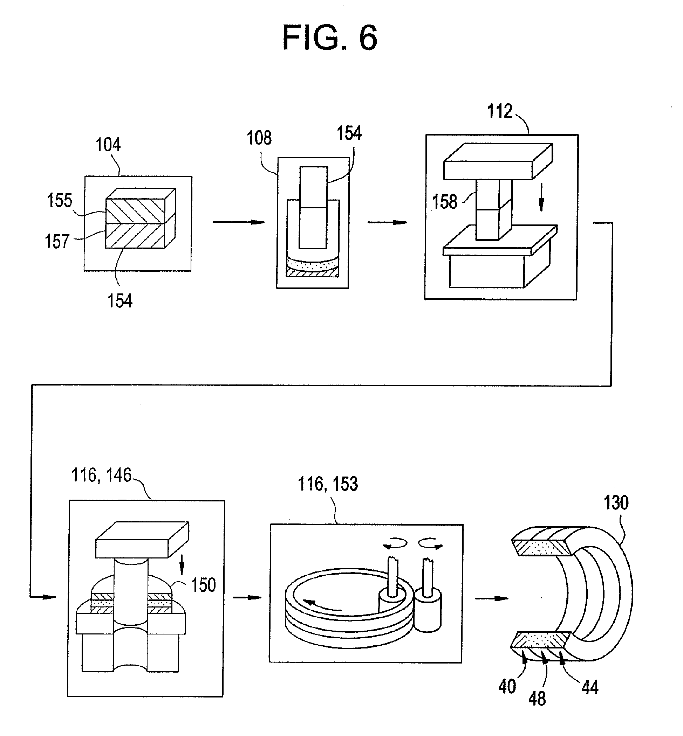

Referring now to Figure 6, a schematic pictorial representation of another process to manufacture the member 36, such as the dual alloy spacer ring 130 is depicted. The process depicted in Figure 6 utilizes a dual alloy electrode 154 as an initial process input. In an embodiment, the selecting appropriate materials at Step 104 includes selecting a first electrode 155 and a second electrode 157 made from the first material and the second material, respectively, which are similar to the materials of the first and the second rotor subassemblies 28, 32, respectively. The selecting appropriate materials at Step 104 further includes producing the dual alloy electrode by at least one of fusion welding and inertia welding together the two electrodes 155, 157. The metallurgically combining at step 108 includes electro slag remelting (ESR) the dual alloy electrode 154 to provide as the preform a dual alloy ingot 158 having a small chemical transition zone in the center portion. The forming at Step 112 includes forging to size the preform 158 and provide the desired increased strength. The shaping at Step 116 includes another forging 146 to produce a "donut-shaped" preform 150, and ring rolling 153 to provide the dual alloy spacer ring 130.

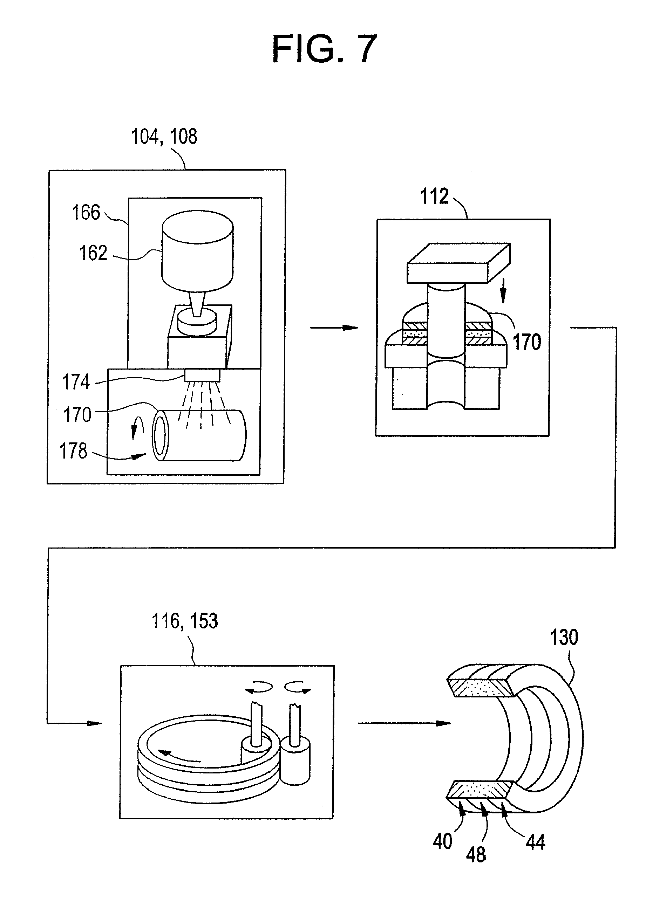

Referring now to Figure 7, a schematic pictorial representation of another process to manufacture the member 36, such as the dual alloy spacer ring 130 is depicted. In an embodiment, the selecting at Step 104 appropriate materials includes selecting the first material substantially similar to the material of the first item 28 and the second material substantially similar to the material of the second item 32, and placing into a melt crucible 162 disposed within a vacuum chamber 166 to produce a "donut-shaped" preform 170. The metallurgically combining at Step 108 includes melting and spraying the first material and the second material via an atomizer 174 onto a rotating preform mandrel 178. The forming at Step 112 sizes and strengthens the "donut-shaped" preform, and the shaping at Step 116 includes ring rolling 153 to provide the dual alloy spacer ring 130.

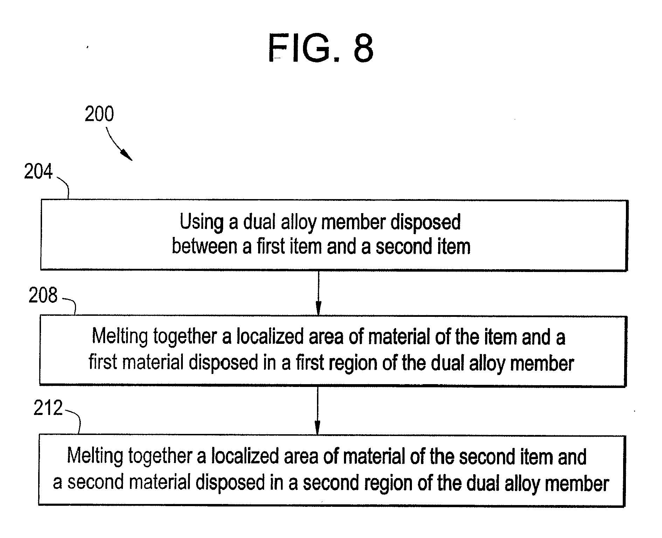

In view of the foregoing, the member 36 facilitates a method to join two items that are made from different materials. Referring now to Figure 8 in conjunction with Figure 3, a flowchart 200 of process steps for joining two items, such as the first item 28 and the second item 32, made from different materials is depicted.

The method begins with using at Step 204 the dual alloy transition member 36 disposed between the first item 28 and the second item 32. The member 36 having the first region 40 for forming the first weld joint 52 with the first item 28, the second region 44 for forming the second weld joint 56 with the second item 32, and the wrought transition region 48 between the first region 40 and the second region 44. The transition region 48 also includes the chemical gradient between the first material of the first region 40 and the second material of the second region 44.

The method continues with creating heat between the first item 28 and the first region 40 of the member 36 and melting together at Step 208 a localized area of the material of the first item 28 and the first material in the first region 40 of the member 36. Creation of the heat is controlled such that melting of the material of the first item 28 and the first material of member 36 is absent any melting of the second material in the second region 44. Therefore the first weld joint 52 is created substantially absent of any intermixing with the second material of the second region 44 of the member 36. Accordingly, the first weld joint 52 is absent defects that result from intermixing of different molten materials and compromise weld joint 52 strength. As used herein, the term "substantially absent" shall refer to a weld of the member 36 that is not affected by any of the defects that customarily result from intermixing of two materials.

The method continues with creating heat between the second item 32 and the second region 44 of the member 36 and melting together at Step 212 a localized area of the material of the second item 32 and the second material in the second region 44 of the member 36. Creation of the heat is controlled such that melting of the material of the second item 32 and the second material is absent any melting of the first material in the first region 40, thereby creating the second weld joint 56 that is substantially absent any intermixing of the first material of the first region 40 of the member 36. Accordingly, the second weld joint 52 is absent defects that result from intermixing of different molten materials and compromise weld joint 56 strength.

Following creation of the first weld joint 52 and the second weld joint 56, the first item 28 is joined to the second item 32 via the member 36, which provides the structural connection between the first item 28 and the second item 32.

In an embodiment, creation of the heat for the melting within at least one of Step 208 and Step 212 includes developing an electrical arc between a welding tool and the materials to be joined. In another embodiment, creation of the heat for the melting within at least one of Step 208 and Step 212 includes creating friction via relative motion between the item 28, 30 and the member 36.

In an embodiment, the method further includes heat-treating to optimize mechanical properties of the member 36 following welding. In one embodiment, the member 36 is heat-treated as one single, monolithic member using uniform heat-treatment parameters, such as temperature and duration of exposure for example to optimize properties, such as strength, ductility, impact resistance, and hardness, for example. In another embodiment, the member 36 is heat-treated using different heat-treatment parameters with respect to each of the first region 40 and the second region 44, with the heat treatment parameters being selected in accordance with characteristics of the first material and the second material, such as chemical composition and microstructure for example. In yet another embodiment, at least a portion of the items 28, 32 to which the member is joined are heat-treated in conjunction with the first region 40 and the second region 44, using parameters selected in accordance with characteristics of the first material and the second material to optimize properties of the items 28, 32, the weld joints 52, 56, and the first region 40 and second region 44.

As disclosed, some embodiments of the invention may include some of the following advantages: the ability to reduce a complexity and mass of a turbine rotor by welding rotor subassemblies; the ability to enhance weldability of turbine rotor components having dissimilar advanced materials that are optimized for the operating conditions to which they are exposed; and the ability to perform two weld joints between two items of dissimilar metals, with each weld joint of the two weld joints between similar materials.

While embodiments of the invention have been described using a dual alloy ring, it will be appreciated that the scope of the invention is not so limited, and that embodiments of the invention will also apply to members 36 that include more than two alloys.

While the invention has been described with reference to exemplary embodiments, it will be understood that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best or only mode contemplated for carrying out this invention, but that the invention will include all embodiments falling within the scope of the appended claims. Also, in the drawings and the description, there have been disclosed exemplary embodiments of the invention and, although specific terms may have been employed, they are unless otherwise stated used in a generic and descriptive sense only and not for purposes of limitation, the scope of the invention therefore not being so limited. Moreover, the use of the terms first, second, etc. do not denote any order or importance, but rather the terms first, second, etc. are used to distinguish one element from another. Furthermore, the use of the terms a, an, etc. do not denote a limitation of quantity, but rather denote the presence of at least one of the referenced item.

## Claims

1. A method to join a first item (28) to a second item (32), the first item (28) and the second item (32) made from different materials, the method comprising:
using a (204) dual alloy member (36) disposed between the first item (28) and the second item (32), the dual alloy member (36) comprising a first material, a second material different from the first material, and a wrought region (48) between the first material and the second material; and
melting (208) together a localized area of material of the first item and the first material, thereby creating a first weld joint (52) substantially absent intermixing of the first material with the second material, and melting (212) together a localized area of material of the second item and the second material, thereby creating a second weld joint (56) substantially absent intermixing of the second material with the first material, and thereby joining the first item to the second item.

2. The method of Claim 1, wherein at least one of the melting together a localized area of material of the first item (28) and the first material and the melting together a localized area of material of the second item (32) and the second material comprises:
developing an electrical arc.

3. The method of Claim 1 or Claim 2, wherein at least one of the melting together a localized area of material of the first item and the first material and the melting together a localized area of material of the second item and the second material comprises:
developing frictional heating by moving the dual alloy member (36) relative to at least one of the first item (28) and the second item (32).

4. The method of any preceding claim, wherein the dual alloy member (36) comprises:
a dual alloy spacer ring (130).

5. The method of any of the preceding claims, wherein:
the first item (28) comprises a first turbine rotor subassembly and the second item (32) comprises a second turbine rotor subassembly.

6. The method of any of the preceding claims, further comprising:
heat-treating the dual alloy member (36).

7. The method of Claim 6, wherein the heat-treating the dual alloy member (36) comprises:
heat-treating a first region (40) comprising the first material with a first set of heat-treatment parameters in accordance with characteristics of the first material; and
heat-treating a second region (44) comprising the second material with a second set of heat-treatment parameters in accordance with characteristics of the second material, the second set of heat-treatment parameters different from the first set of heat treatment parameters.

8. The method of Claim 7, wherein the heat-treating the dual alloy member (36) comprises:
heat-treating the first region (40) and at least a portion of material of the first item with parameters in accordance with characteristics of the first material; and
heat-treating the second region (44) and at least a portion of material of the second item with characteristics in accordance with properties of the second material.

9. The method of Claim 1, wherein the first material comprises at least one of:
a superalloy;
a martensitic stainless steel;
a low alloy steel; and
a titanium alloy.

10. An assembly of a first item (28) and a second item (32), the assembly comprising:
a dual alloy member (36) disposed between the first item (28) and the second item (32), the dual alloy member (36) comprising a first region (40) comprising a first material, a second region (44) comprising a second material different from the first material, and a wrought transition region (48) between the first region (40) and the second region (44);
a first weld joint (52) disposed between the first region (40) and the first item (28), the first weld joint (52) substantially absent intermixing of the first material with the second material; and
a second weld joint (56) disposed between the second region (44) and the second item (32), the second weld joint (56) substantially absent intermixing of the second material with the first material.

11. The assembly of Claim 10, wherein:
the wrought transition region (48) provides a structural connection between the first item (28) and the second item (32).

12. The assembly of Claim 10, wherein:
the first item (28) comprises a first rotor subassembly of a turbine; and
the second item (32) comprises a second rotor subassembly of the turbine.

13. The assembly of Claim 12, wherein:
the dual alloy member (36) is a dual alloy spacer ring (130).

14. The assembly of Claim 10, wherein the first material comprises at least one of:
a superalloy;
a martensitic stainless steel;
a low alloy steel; and
a titanium alloy.

15. The assembly of Claim 10, wherein:
a portion of the wrought transition region (48) comprises a chemical gradient between the first material and the second material.
